# EUROPÄISCHE PATENTSCHRIFT

(11) **EP 2 247 493 B1**
(45) Veröffentlichungstag und Bekanntmachung des Hinweises auf die Patenterteilung: **06.06.2012**
(21) Anmeldenummer: 09704350.9
(22) Anmeldetag: 22.01.2009
(51) Int. Cl.: B62D 53/08, B62D 29/00

(54) **FAHRZEUGKUPPLUNG ZUM HERSTELLEN EINER MECHANISCHEN VERBINDUNG ZWISCHEN EINEM ERSTEN UND EINEM ZWEITEN FAHRZEUG**
VEHICLE COUPLING FOR PRODUCING A MECHANICAL BOND BETWEEN A FIRST AND A SECOND VEHICLE
SYSTÈME D'ATTELAGE DE VÉHICULE PERMETTANT DE CRÉER UNE LIAISON MÉCANIQUE ENTRE UN PREMIER VÉHICULE ET UN SECOND VÉHICULE

(30) Priorität: 26.01.2008 DE 102008006203
(43) Veröffentlichungstag der Anmeldung: 10.11.2010
(73) Patentinhaber: Jost-Werke GmbH, 63263 Neu-Isenburg (DE)
(72) Erfinder: SCHMIDT, Dirk, 65553 Limburg (DE); ALGÜERA GALLEGO, José Manuel, 63739 Aschaffenburg (DE)
(74) Vertreter: Mehler Achler
(86) Internationale Anmeldenummer: PCT/EP2009/050701
(87) Internationale Veröffentlichungsnummer: WO 2009/092755

(56) Entgegenhaltungen:
- EP-A- 0 927 590
- DE-A1- 10 260 531
- DE-A1- 19 720 109
- US-A- 5 431 424
- US-A- 5 622 767
- US-A1- 2006 170 191

## Beschreibung

Die Erfindung betrifft eine Fahrzeugkupplung zum Herstellen einer mechanischen Verbindung zwischen einem ersten und einem zweiten Fahrzeug, wobei die Fahrzeugkupplung einen Kupplungskörper umfasst. Eine derartige Fahrzeugkupplung ist allgemein bekannt.

Der Kupplungskörper und die damit zusammenwirkenden Bauteile werden üblicherweise gießtechnisch aus Stahl- oder Sphäroguss hergestellt oder auch aus Blechteilen geschweißt. Die daraus resultierende robuste Bauweise ist bei den hohen zu erwartenden Betriebskräften notwendig, um Verformungen zu vermeiden und einen maximalen Verschleißschutz zu gewährleisten. Diese bisher angewandten Bauweisen sind jedoch insofern nachteilig, als dass das Eigengewicht der Fahrzeugkupplung sehr hoch ist, was sich wiederum nachteilig auf das Leergewicht des Fahrzeugs auswirkt, so dass bei einem vorgegebenen maximal zulässigen Gesamtgewicht eine entsprechend geringere Nutzlast zur Verfügung steht. Ein weiterer Nachteil von Gussbauteilen liegt in dem Risiko der Bildung von Einschlüssen und Lunkem insbesondere in Bereichen lokal erforderlicher Metallanhäufungen.

Demzufolge lag der Erfindung die Aufgabe zugrunde, eine Fahrzeugkupplung mit einem gegenüber bekannten

Fahrzeugkupplungen deutlicht verringerten Eigengewicht bereitzustellen.

Die Aufgabe wird erfindungsgemäß mit einer Fahrzeugkupplung gelöst, bei der mindestens ein struktureller Bereich des Kupplungskörpers aus einem Metallschaum gebildet ist. Der wesentliche Vorteil des Metallschaumes liegt in der sehr hohen Festigkeit bei einem gegenüber Stahl deutlich verringerten Raumgewicht.

Der Metallschaum wird aus einem Treibmittel und einem diesem zugesetzten Metallpulver hergestellt, wobei das Metallpulver meist aus Aluminium oder Stahl besteht. Nach dem Zusammenführen und Mischen des Treibmittels mit dem Metallpulver folgen ein erster Formgebungsprozess und ein anschließendes Aufschäumen. Durch die Schaumstruktur ergibt sich eine äußerst geringe Volumendichte bei nur geringfügig verringerter Festigkeit des Metallschaums.

Vorzugsweise umfasst der Kupplungskörper eine Kupplungsplatte einer Sattelkupplung. Alternativ hierzu kann der Kupplungskörper auch aus einem Kupplungsmaul einer Anhänger- oder Bolzenkupplung gebildet sein.

Es hat sich als günstig herausgestellt, wenn der Metallschaum ganz oder teilweise eine Beschichtung aufweist. Die aus Metallschaum gefertigte Fahrzeugkupplung beziehungsweise die entsprechend ausgebildeten Bereiche weisen eine vergleichsweise raue Oberfläche auf, die durch eine Beschichtung geglättet werden kann. Darüber hinaus lässt sich durch die Beschichtung die Korrosionsbeständigkeit erhöhen. Die Beschichtung kann beispielsweise aus einem Fülllack gebildet sein.

Ebenso ist es möglich, die Beschichtung aus einer Umspritzung oder Umschäumung mit einem Kunststoff vorzusehen. Diese kann teilweise um die gesamte Fahrzeugkupplung oder partiell aufgebracht sein. Insbesondere können einzelne Bauteile vollständig mit der Beschichtung gekapselt sein.

Zweckmäßigerweise ist der strukturelle Bereich in einer Sandwich-Bauweise gebildet. Die Sandwichbauweise ist eine Bauweise, bei der mehrere Schichten verschiedener Eigenschaften in einem Werkstoff eingebettet werden. Als Konstruktionsweise bezeichnet die Sandwichbauweise eine Form des Leichtbaus, bei dem die Bauteile aus kraftaufnehmenden Decklagen bestehen, die durch einen relativ weichen, meist leichten, Kemwerkstoff auf Abstand gehalten werden. Diese Teile sind bei geringem Gewicht sehr biege- und beulsteif. Das Kernmaterial überträgt auftretende Schubkräfte und stützt die Deckschichten.

Bei der Sandwich-Bauweise sollte der Metallschaum den Kern bilden, welcher mit mindestens einer Decklage aus Stahl und/oder Kunststoff und/oder Aluminium verbunden ist. Dabei soll an Stellen, an denen eine geschlossenporige Oberfläche benötigt wird, um zum Beispiel niedrige Reibwerte zu erreichen, ein herkömmliches Stahlblech oder gegebenenfalls auch eine Kunststoffschicht zum Einsatz kommen.

Alternativ oder zusätzlich zu der Sandwich-Bauweise umfasst der strukturelle Bereich vorteilhafterweise ein an dem Kupplungskörper ausgebildetes Stützelement aus Metallschaum. Unter einem Stützelement wird eine die Kupplungsplatte oder das Kupplungsmaul verstärkende Rippenstruktur verstanden. Bei einer Sattelkupplung ist diese an der Unterseite der Kupplungsplatte angeordnet, bei einem Kupplungsmaul auf der Außenseite der konisch aufgeweiteten Einfahröffnung.

Günstigerweise ist das Stützelement durch eine Klebeschicht mit dem Kupplungskörper verbunden. Die Klebeschicht kann mittels einer Kunststoffmasse erfolgen, die vorzugsweise faserverstärkt ist.

Als Materialien für die Kunststoffmasse eignen sich Thermoplaste oder Duroplaste. Ein thermoplastischer Kunststoff verformt sich bei Wärme und behält beim Erkalten seine Form bei. Die bekanntesten Thermoplaste sind Polypropylen, Polyethylen, Polyester, Polyvinylchlorid und Polyamid. Duroplaste, auch Duromere genannt, sind Kunststoffe, die nach ihrer Aushärtung nicht mehr verformt werden können. Duroplaste sind harte, glasartige Polymerwerkstoffe, die über chemische Hauptvalenzbindungen dreidimensional fest vernetzt sind. Die Vernetzung erfolgt beim Mischen von Vorprodukten mit Verzweigungsstellen und wird entweder bei Raumtemperatur mit Hilfe von Katalysatoren chemisch oder bei hohen Temperaturen thermisch aktiviert.

Als Kunststoffmasse kann insbesondere auch ein Kunststoffschaum verwendet werden. Ebenso ist auch die Verwendung eines Metallschaumes besonders gut für das Erstellen einer Klebeschicht geeignet.

Weitere Möglichkeiten, das Stützelement mit dem Kupplungskörper zu verbinden, bestehen im thermischen Fugen oder in einer Schraubbeziehungsweise Nietverbindung.

Wegen der hohen Biegesteifigkeit ist gemäß einer bevorzugten Ausführungsform der Metallschaum in einem im Kraftfluss liegenden Abschnitt des Kupplungskörpers angeordnet.

Vorteilhafterweise ist der Metallschaum mit einer Lagerstelle und/oder Befestigungsbohrung ausgebildet. Die Lagerstellen sind an einer Sattelkupplung an gegenüberliegenden seitlichen Positionen zum Abstützen der Kupplungsplatte an darunter befindlichen Lagerböcken angeordnet. Die Befestigungsbohrungen können beispielsweise als Gewindeeinsatzteil ausgebildet sein.

Zum besseren Verständnis wird die Erfindung nachfolgend anhand von insgesamt 5 Figuren näher erläutert. Es zeigen die:
- **Fig. 1:**: Eine teilweise Unteransicht auf eine Kupplungsplatte einer Sattelkupplung;
- **Fig. 2:**: einen Querschnitt längs der Schnittlinie A-A in Fig. 1 gemäß einer ersten Ausführungsform mit einem an die Kupplungsplatte geklebten Stützelement;
- **Fig. 3:**: einen Querschnitt längs der Schnittlinie A-A in Fig. 1 gemäß einer zweiten Ausführungsform mit einem umschäumten Stützelement;
- **Fig. 4:**: einen Querschnitt längs der Schnittlinie A-A in Fig. 1 gemäß einer dritten Ausführungsform mit einer Kupplungsplatte in Sandwich-Bauweise und
- **Fig. 5:**: einen Querschnitt längs der Schnittlinie A-A in Fig. 1 gemäß einer vierten Ausführungsform mit einem an die Kupplungsplatte geschraubten Stützelement.

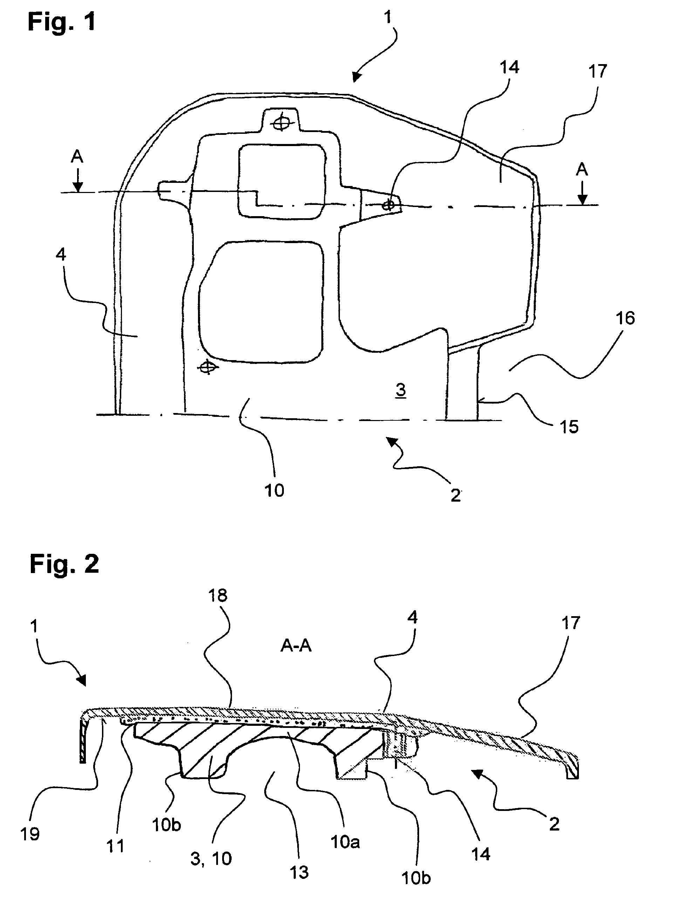

Die Figur 1 zeigt eine Unteransicht auf eine Kupplungsplatte 4 einer Sattelkupplung, an welcher die Erfindung stellvertretend für alle Kupplungskörper 1 erläutert wird.

Die Kupplungsplatte 4 weist auf ihrer hinteren Seite 15 eine Einfahröffnung 16 auf, in welche ein nicht gezeigter Königszapfen eines Aufliegers in gewöhnlicher Weise in die Sattelkupplung eingefahren werden kann. Die Einfahröffnung 16 ist beidseitig durch ein Kupplungshorn 17 begrenzt, wobei in der Darstellung der Figur 1 lediglich das in Fahrtrichtung rechte Kupplungshorn 17 erkennbar ist.

Im Fahrbetrieb stützt sich die Unterseite des ebenfalls nicht gezeigten Aufliegers an dem Lagerbereich 18 (siehe Figur 2) der Kupplungsplatte 4 ab. In diesem Lagerbereich 18 werden daher erhebliche Kräfte in die Kupplungsplatte 4 eingeleitet. Um nicht die gesamte Kupplungsplatte 4 mit einer großen Materialstärke und einem entsprechend hohen Gewicht zu dimensionieren, ist auf der Unterseite 19 (siehe Figur 2) der Kupplungsplatte 4 ein struktureller Bereich 2 in Form eines gegenüber der Kupplungsplatte 4 nach unten vorstehenden Stützelementes 10 aus Metallschaum 3 angeordnet. An dem aus Metallschaum 3 gefertigten Stützelement 10 ist eine der beiden spiegelsymmetrisch angeordneten Lagerstellen 13 zu erkennen, mit denen sich die Kupplungsplatte 4 auf nicht gezeigten Lagerböcken abstützt.

Das Stützelement 10 umfasst eine sich im Wesentlichen horizontal erstreckende Grundplatte 10a, auf der senkrecht stehende Wandabschnitte 10b ausgebildet sind.

Wie der Figur 2 entnommen werden kann, ist das Stützelement 10 mittels einer Klebeschicht 11 unter die Kupplungsplatte 4 geklebt. Dabei ist die Klebeschicht 11 im Wesentlichen auf den Kontaktbereich des Stützelementes 10 zu der Kupplungsplatte 4 beschränkt. Der Metallschaum 3 des Stützelementes 10 ermöglicht ein besonders einfaches Einbringen beispielsweise einer Befestigungsbohrung 14. In diese können dann weitere Aggregate oder auch Bauteile der Verschlussmechanik mit dem Kupplungskörper 1 verschraubt werden.

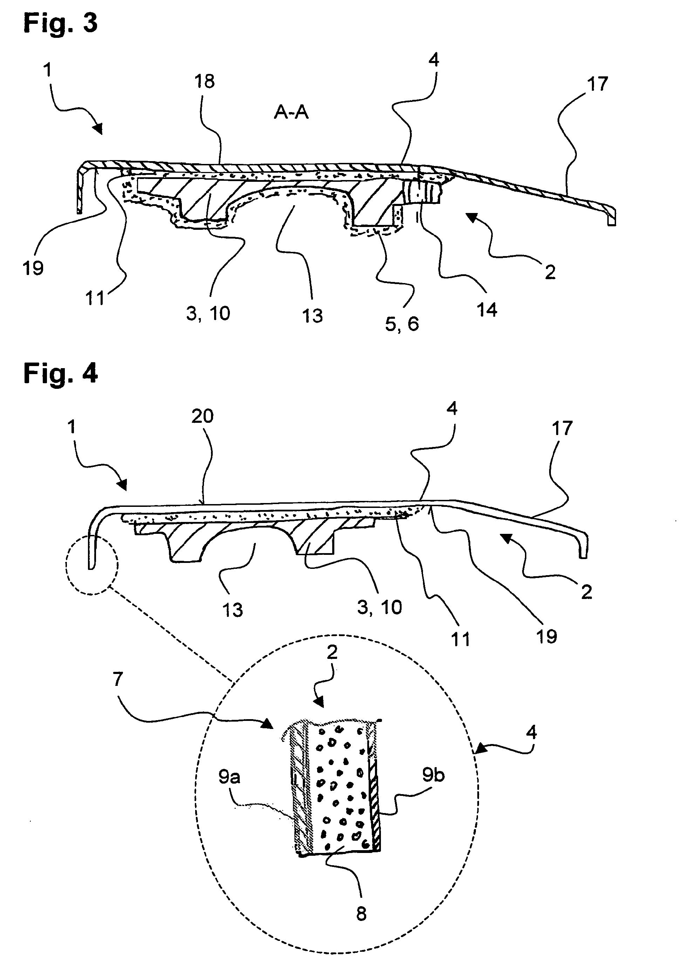

Die Figur 3 zeigt eine weitere Ausführungsform, bei welcher das Stützelement 10 neben der Klebeschicht 11 mit einer Beschichtung 5 versehen ist. Die Beschichtung 5 ist als Umschäumung 6 aufgebracht und umschließt das Stützelement 10 annähernd vollständig. Lediglich ein Bereich rings um die Befestigungsbohrung 14 ist von der Umschäumung 6 ausgenommen, so dass dort der Metallschaum 3 eine von außen zugängliche Oberfläche bildet. Diese Oberfläche aus Metallschaum 3 lässt höhere Flächenpressungen für die an der Befestigungsbohrung 14 zu verschraubenden Bauteile zu.

In der Figur 4 ist eine weitere Ausführungsform mit einer Kupplungsplatte 4 in einer Sandwich-Bauweise 7 dargestellt. Die Oberseite 20 der Kupplungsplatte 4 weist als obere Decklage 9a eine Blechplatte auf, um einen widerstandsfähigen Lagerbereich 18 mit geringen Reibwerten zu gewährleisten. Eine sich darauf abstützende, nicht gezeigte Aufliegerplatte kann demzufolge verschleißarm auf dem Lagerbereich 18 abgleiten.

Unter der oberen Decklage 9a wurde als Kern 8 der Sandwich-Bauweise unmittelbar der Metallschaum 3 eingebracht, welcher nach dem Aushärten eine kraftschlüssige Verbindung mit der Decklage 9a eingeht. Darüber hinaus weist die Sandwich-Bauweise 7 eine untere Decklage 9b auf, welche ebenfalls unmittelbar auf dem Metallschaum 3 haftet. Die untere Decklage 9b kann insbesondere eine Kunststoffschicht sein.

Die untere Decklage 9b ist über eine Klebeschicht 11 mit dem zusätzlichen Stützelement 10 aus Metallschaum 3 verbunden. Auch bei dieser Ausführungsform ist eine vollständig eingegossene oder umschäumte Anbringung des Stützelementes 10 möglich.

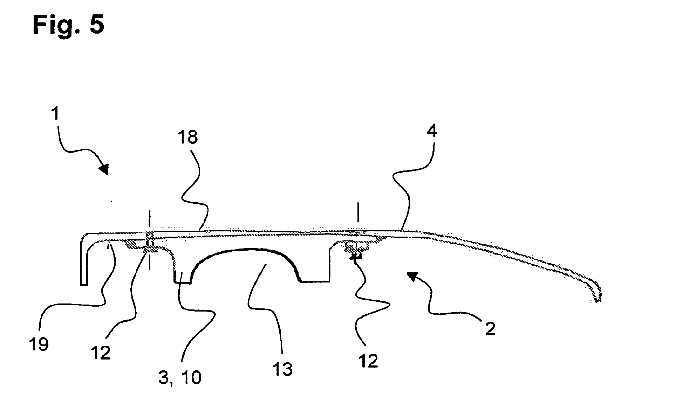

Die Figur 5 zeigt eine alternative Anbringung des Stützelementes 10 an der Kupplungsplatte 4 mittels mehrerer Verbindungselemente, von denen exemplarisch Schrauben 12 dargestellt sind. Diese durchsetzten die Kupplungsplatte 4 in vertikaler Richtung vollständig und sind auf der Unterseite 19 mit einer Mutter ortsfest gehalten. Bei dieser Ausführungsform kann auf eine Klebeschicht 11 vollständig verzichtet werden.

### Bezugszeichenliste

- 1: Kupplungskörper
- 2: struktureller Bereich
- 3: Metallschaum
- 4: Kupplungsplatte
- 5: Beschichtung
- 6: Umschäumung
- 7: Sandwich-Bauweise
- 8: Kern
- 9a: obere Decklage
- 9b: untere Decklage
- 10: Stützelement
- 10a: Grundplatte
- 10b: senkrechter Wandabschnitt
- 11: Klebeschicht
- 12: Schraube
- 13: Lagerstelle
- 14: Befestigungsbohrung
- 15: hintere Seite
- 16: Einfahröffnung
- 17: Kupplungshorn
- 18: Lagerbereich
- 19: Unterseite
- 20: Oberseite

## Patentansprüche

1. Fahrzeugkupplung zum Herstellen einer mechanischen Verbindung zwischen einem ersten und einem zweiten Fahrzeug, wobei die Fahrzeugkupplung einen Kupplungskörper (1) umfasst,
**dadurch gekennzeichnet,**
**dass** mindestens ein struktureller Bereich (2) des Kupplungskörpers (1) aus einem Metallschaum (3) gebildet ist.

2. Fahrzeugkupplung nach Anspruch 1, **dadurch gekennzeichnet, dass** der Kupplungskörper (1) eine Kupplungsplatte (4) umfasst.

3. Fahrzeugkupplung nach Anspruch 1, **dadurch gekennzeichnet, dass** der Kupplungskörper (1) ein Kupplungsmaul umfasst.

4. Fahrzeugkupplung nach einem der Ansprüche 1 bis 3, **dadurch gekennzeichnet, dass** der Metallschaum (3) ganz oder teilweise eine Beschichtung (5) aufweist.

5. Fahrzeugkupplung nach Anspruch 4, **dadurch gekennzeichnet, dass** die Beschichtung (5) aus einem Fülllack gebildet ist.

6. Fahrzeugkupplung nach Anspruch 4, **dadurch gekennzeichnet, dass** die Beschichtung (5) aus einer Umspritzung oder Umschäumung (6) mit einem Kunststoff gebildet ist.

7. Fahrzeugkupplung nach einem der Ansprüche 1 bis 6, **dadurch gekennzeichnet, dass** der strukturelle Bereich (2) in einer Sandwich-Bauweise (7) gebildet ist.

8. Fahrzeugkupplung nach Anspruch 7, **dadurch gekennzeichnet, dass** bei der Sandwich-Bauweise (7) der Metallschaum (3) den Kern (8) bildet, welcher mit mindestens einer Decklage (9a, 9b) aus Stahl und/oder Kunststoff und/oder Aluminium verbunden ist.

9. Fahrzeugkupplung nach einem der Ansprüche 1 bis 8, **dadurch gekennzeichnet, dass** der strukturelle Bereich (2) ein an dem Kupplungskörper (1) ausgebildetes Stützelement (10) aus Metallschaum (3) umfasst.

10. Fahrzeugkupplung nach Anspruch 9, **dadurch gekennzeichnet, dass** das Stützelement (10) durch eine Klebeschicht (11) mit dem Kupplungskörper (1) verbunden ist.

11. Fahrzeugkupplung nach Anspruch 9, **dadurch gekennzeichnet, dass** das Stützelement (10) durch thermisches Fugen mit dem Kupplungskörper (1) verbunden ist.

12. Fahrzeugkupplung nach Anspruch 9, **dadurch gekennzeichnet, dass** das Stützelement (10) mittels Schrauben (12) oder Nieten mit dem Kupplungskörper (1) verbunden ist.

13. Fahrzeugkupplung nach einem der Ansprüche 1 bis 12, **dadurch gekennzeichnet, dass** der Metallschaum (3) in einem im Kraftfluss liegenden Abschnitt des Kupplungskörpers (1) angeordnet ist.

14. Fahrzeugkupplung nach einem der Ansprüche 1 bis 13, **dadurch gekennzeichnet, dass** der Metallschaum (3) mit einer Lagerstelle (13) und/oder Befestigungsbohrung (14) ausgebildet ist.

## Claims

1. Vehicle coupling for producing a mechanical connection between a first and a second vehicle, the vehicle coupling comprising a coupling member (1),
**characterised in that**
at least one structural region (2) of the coupling member (1) is produced from a metal foam (3).

2. Vehicle coupling according to claim 1, **characterised in that** the coupling member (1) comprises a coupling plate (4).

3. Vehicle coupling according to claim 1, **characterised in that** the coupling member (1) comprises a coupling jaw.

4. Vehicle coupling according to any one of claims 1 to 3, **characterised in that** the metal foam (3) completely or partially has a coating (5).

5. Vehicle coupling according to claim 4, **characterised in that** the coating (5) is formed from a filler varnish.

6. Vehicle coupling according to claim 4, **characterised in that** the coating (5) is formed by means of a spray-coating or a foam-coating (6) with a plastics material.

7. Vehicle coupling according to any one of claims 1 to 6, **characterised in that** the structural region (2) is formed in a sandwich-like construction (7).

8. Vehicle coupling according to claim 7, **characterised in that**, with the sandwich-like construction (7), the metal foam (3) forms the core (8) which is connected to at least one covering layer (9a, 9b) of steel and/or plastics material and/or aluminium.

9. Vehicle coupling according to any one of claims 1 to 8, **characterised in that** the structural region (2) comprises a support element (10) of metal foam (3) that is constructed on the coupling member (1).

10. Vehicle coupling according to claim 9, **characterised in that** the support element (10) is connected to the coupling member (1) by means of an adhesive layer (11).

11. Vehicle coupling according to claim 9, **characterised in that** the support element (10) is connected to the coupling member (1) by means of thermal joining.

12. Vehicle coupling according to claim 9, **characterised in that** the support element (10) is connected to the coupling member (1) by means of screws (12) or rivets.

13. Vehicle coupling according to any one of claims 1 to 12, **characterised in that** the metal foam (3) is arranged in a portion of the coupling member (1) located in the force path.

14. Vehicle coupling according to any one of claims 1 to 13, **characterised in that** the metal foam (3) is constructed so as to have a bearing location (13) and/or securing hole (14).

## Revendications

1. Attelage de véhicule pour réaliser une liaison mécanique entre un premier véhicule et un deuxième véhicule, l'attelage de véhicule comprenant un corps d'attelage (1),
**caractérisé en ce qu'**au moins une zone structurelle (2) du corps d'attelage (1) est réalisée en mousse métallique (3).

2. Attelage de véhicule selon la revendication 1, **caractérisé en ce que** le corps d'attelage (1) comprend une plaque d'attelage (4).

3. Attelage de véhicule selon la revendication 1, **caractérisé en ce que** le corps d'attelage (1) comprend une bouche d'attelage.

4. Attelage de véhicule selon l'une des revendications 1 à 3, **caractérisé en ce que** la mousse métallique (3) présente en totalité ou en partie un revêtement (5).

5. Attelage de véhicule selon la revendication 4, **caractérisé en ce que** le revêtement (5) est constitué d'une laque bouche-pores.

6. Attelage de véhicule selon la revendication 4, **caractérisé en ce que** le revêtement (5) est constitué d'un enrobage de matière plastique par injection ou par moussage (6).

7. Attelage de véhicule selon l'une des revendications 1 à 6, **caractérisé en ce que** la zone structurelle (2) est réalisée en un mode de construction sandwich (7).

8. Attelage de véhicule selon la revendication 7, **caractérisé en ce que**, dans le mode de construction sandwich (7), la mousse métallique (3) forme l'âme (8), qui est assemblée à au moins une couche de recouvrement (9a, 9b) en acier et/ou en matière plastique et/ou en aluminium.

9. Attelage de véhicule selon l'une des revendications 1 à 8, **caractérisé en ce que** la zone structurelle (2) comprend un élément de soutien (10) en mousse métallique (3) formé sur le corps d'attelage (1).

10. Attelage de véhicule selon la revendication 9, **caractérisé en ce que** l'élément de soutien (10) est assemblé au corps d'attelage (1) par une couche de colle (11).

11. Attelage de véhicule selon la revendication 9, **caractérisé en ce que** l'élément de soutien (10) est assemblé au corps d'attelage (1) par jointoyage thermique.

12. Attelage de véhicule selon la revendication 9, **caractérisé en ce que** l'élément de soutien (10) est assemblé au corps d'attelage (1) au moyen de boulons (12) ou de rivets.

13. Attelage de véhicule selon l'une des revendications 1 à 12, **caractérisé en ce que** la mousse métallique (3) est disposée dans une partie du corps d'attelage (1) qui est située dans le flux de force.

14. Attelage de véhicule selon l'une des revendications 1 à 13, **caractérisé en ce que** la mousse métallique (3) est dotée d'un point d'appui (13) et/ou d'un perçage de fixation (14).
